# EUROPEAN PATENT APPLICATION

(11) **EP 2 360 876 A1**
(43) Date of publication of application: **24.08.2011**
(21) Application number: 09828573.7
(22) Date of filing: 24.08.2009
(51) Int. Cl.: H04L 12/46

(54) **METHOD AND SYSTEM FOR IMPLEMENTING WEB APPLICATION AND EXTERNAL DEVICE NETWORK CONNECTION**

(30) Priority: 28.11.2008 CN 200810181581
(71) Applicant: ZTE Corporation, Shenzhen, Guangdong 518057 (CN)
(72) Inventor: WANG, Ping, Shenzhen Guangdong 518057 (CN)
(74) Representative: Garratt, Peter Douglas
(86) International application number: PCT/CN2009/073473
(87) International publication number: WO 2010/060312

(57) **Abstract**

The present invention discloses a network interconnection method and system between a WEB application and an external device, the system includes: a communication module, configured to receive a first message from a transmitter, wherein the first message carries a first message event number, a node identifier of the transmitter, a thread identifier of the transmitter, a node identifier of a receiver, a thread identifier of the receiver, and a first message content, and to encapsulate the first message event number, the node identifier of the transmitter, the thread identifier of the transmitter, the node identifier of the receiver, the thread identifier of the receiver into a first message header according to a predetermined structure, to transmit the first message header and the first message content; a WEB proxy module, configured to receive the first message header and the first message content from the communication module, to read the thread identifier of the transmitter from the first message header, to establish a corresponding sub-thread according to the thread identifier of the transmitter, to transmit the first message header and the first message content to the predetermined sub-thread of the receiver. By the technical solution provided by the present invention, the difficulty in WEB development is reduced and the performance and stability of the WEB application is improved.

## Description

### Field of the Invention

The present invention relates to communication field, in particular to a network interconnection method and system between a WEB application and an external device.

### Background of the Invention

With the development of Java, more and more services come forth based on the WEB development, relating to a increasing broader range, such as value-adding service, message services, and etc..

Although the WEB development is relatively simple, it is not easy to develop a complete WEB service. Various difficulties still exist in the development process. In general, the following problems exist in the WEB service development at present.
1. it is difficult for service based on the WEB development to realize network interconnection with other devices, especially in the case of network interconnection with a plurality of devices simultaneously, and in addition, it is difficult to maintain communication links and guarantee the stability, wherein when a problem occurs to the WEB server, it is impossible to promptly find the problem and automatically restore to normal.
2. when the service based on WEB development, as one node, interconnects with other devices, there exists the problem of device combination, thereby increasing the difficulty for engineers to deploy and maintain devices.
3. due to the limitation of Java language per se, it is difficult to ensure the performance of the service based on the WEB development when the volume of message is larger.

### Summary of the Invention

The present invention is proposed in consideration of the above mentioned problem in the relative art. For this reason, the main purpose of the present invention is to provide a network interconnection method and system between a WEB application and an external device to solve the above mentioned problem.

According to one aspect of the present invention, a network interconnection system between a WEB application and an external device is provided.

The network interconnection system between a WEB application and an external device according to the present invention comprises: a communication module, configured to receive a first message from the transmitter, wherein the first message carries a first message event number, a node identifier of the transmitter, a thread identifier of the transmitter, a node identifier of a receiver, a thread identifier of the receiver, and a first message content, and to encapsulate the first message event number, the node identifier of the transmitter, the thread identifier of the transmitter, the node identifier of the receiver, the thread identifier of the receiver into a first message header according to a predetermined structure, and to transmit the first message header and the first message content; and a WEB proxy module, configured to receive the first message header and the first message content from the communication module, to read the thread identifier of the transmitter from the first message header, to establish a corresponding sub-thread according to the thread identifier of the transmitter, to transmit the first message header and the first message content to the predetermined sub-thread of the receiver according to the node identifier of the receiver through the established sub-thread, wherein, the predetermined sub-thread of the receiver is corresponding to the thread identifier of the receiver.

Preferably, above mentioned WEB proxy module is further configured to receive from the receiver a second message, which carries a second message header and the second message content, wherein the second message header carries a identifier of the transmitter, the thread identifier of the transmitter, the receiver identifier, a thread identifier of the receiver, and the second message event number, wherein the second message header has the structure same as that of the first message header, and forwards the second message header and the second message content to the communication module according to the sub-thread corresponding to the receiver thread identifier; and the communication module is further configured to receive the second message, to parse the second message header according to the predetermined structure to obtain the node identifier of the transmitter in the second message header, to transmit the second message content to the predetermined sub-thread of the transmitter according to the node identifier of the transmitter, wherein, the transmitter predetermined sub-thread is corresponding to the thread identifier of the transmitter.

Preferably, the system also comprises: a transceiver module, configured to receive a message header and message content from the communication module, and to forward the message header and the message content to the WEB proxy module, wherein the communication module and the transceiver module perform message interaction via a TCP link or a UDP link.

Preferably, the system also comprises: a forwarding module, configured to forward the message header and the message content to the receiver and/or transmitter.

Preferably, the above node identifier of the transmitter/receiver comprises: module number and office number.

Preferably, the above mentioned communication module performs process on the received message thereof by using Java language.

Preferably, the WEB proxy module performs process on the received message thereof by using C language.

Preferably, the above mentioned transmitter and the receiver each comprise one of the following : an upper layer WEB application and a function module.

Preferably, the above mentioned first message event and the second message event are identical or different.

In another aspect, the present invention provides a network interconnection system between a WEB application and an external device.

The network interconnection system between an WEB application and an external device according to the present invention comprises: a WEB proxy module, configured to receive from a receiver a message which carries a message header and message content, wherein the message header carries a node identifier of the transmitter, a thread identifier of the transmitter, a node identifier of the receiver, a thread identifier of the receiver, a message event number, and to transmit the message header and the message content according to the sub-thread corresponding to the thread identifier of the receiver; and a communication module, configured to receive message, to parse the message header to obtain the node identifier of the transmitter in the message header, to transmit the message content to the predetermined sub-thread of the transmitter according to the node identifier of the transmitter, wherein the transmitter predetermined sub-thread is corresponding to the thread identifier of the transmitter.

According to another aspect, the present invention provides a network interconnection method between a WEB application and an external device.

The network interconnection method between a WEB application and an external device according to the present invention comprises: receiving a first message from a transmitter, wherein the first message carries a first message event number, a node identifier of the transmitter, a thread identifier of the transmitter, a node identifier of the receiver, a thread identifier of a receiver, and a first message content; reading the thread identifier of the transmitter from the first message header, establishing a corresponding sub-thread according to the thread identifier of the transmitter, transmitting the first message header and the first message content to the predetermined sub-thread of the receiver via the established sub-thread according to the node identifier of the receiver, wherein the predetermined sub-thread of the receiver is corresponding to the thread identifier of the transmitter.

Preferably, the method also comprises: receiving from the receiver the second message which carries a second message header and a second message content, ,wherein the second message header carries a identifier of the transmitter, the thread identifier of the transmitter, a identifier of the receiver, the thread identifier of the receiver, and a second message event number; parsing the second message header to obtain the node identifier of the transmitter in the second message header, and transmitting the second message content to the predetermined sub-thread of the transmitter according to the node identifier of the transmitter, wherein the predetermined sub-thread of transmitter is corresponding to the thread identifier of the transmitter.

Preferably, the above mentioned first message event number and the second message event number are identical or different.

Preferably, the above mentioned node identifier of the transmitter/receiver comprises: module number, and office number.

By at least one of the above mentioned technical solutions of the present invention, the integration of the devices based on WEB application can achieve the reduced difficulty in WEB development and the improved performance and stability of the WEB application compared with the prior art.

### Brief Description of the Drawings

Drawings are provided for the further understanding of the present invention and form a part of the specification, which are used to explain the present invention together with embodiments of the present invention, rather than limit the present invention, wherein,
Fig.1 is a block diagram of the structure of the network interconnection system between a WEB application and an external device according to a System Embodiment of the present invention;
Fig.2 is a block diagram of a preferred structure of the network interconnection system between a WEB application and an external device according to a System Embodiment of the present invention;
Fig.3 is a block diagram of a particular structure of the network interconnection system between a WEB application and an external device according to a System Embodiment of the present invention;
Fig.4 is a flow chart of the network interconnection method between a WEB application and an external device according to a Method Embodiment of the present invention;
Fig.5 is a processing flow chart of a message transmission method shown in Fig.4; and
Fig.6 is a processing flow chart of a message reception method shown in Fig.4.

### Detailed Description of the Embodiments

### Functionality Overview

The basic idea of present invention is as follows: interconnecting and integrating main/peripheral devices of an intelligent network based on WEB application. As to network interconnection, a Java communication module and a C communication module are designed to cooperate with each other so as to realize interconnection between devices. As to integration of a plurality of application servers, the WEB application is used as a node together with a bottom layer module, rather than used as a separate node, therefore when devices are integrated, the communication difficulties resulting from one server configuring the information of a plurality of nodes can be solved.

The present invention will be detailed in connection with drawings.

### System Embodiment 1

According to an embodiment of the present invention, a network interconnection system between a WEB application and an external network device is provided.

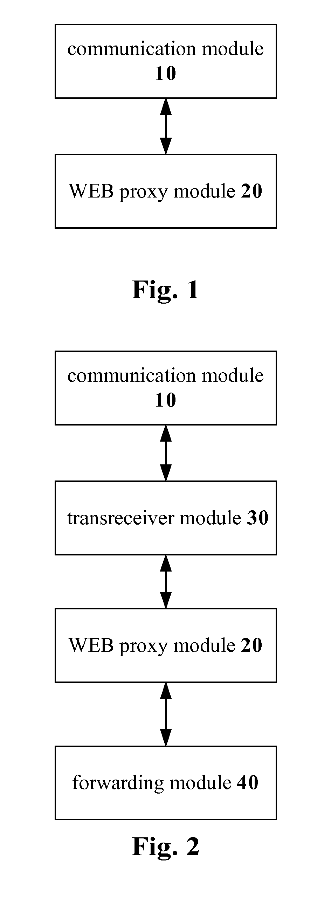

Fig.1 is a block diagram of the structure of the network interconnection system between a WEB application and an external device according to the embodiment of the present invention. As shown in Fig.1, the system comprises communication module 10 and WEB proxy module 20.

The communication module 10 is configured to receive a first message from the transmitter, wherein the first message carries a first message event number, a node identifier of the transmitter, a thread identifier of the transmitter, a node identifier of the receiver, a thread identifier of the receiver, and a first message content, and to capsulate the first message event number, the node identifier of the transmitter, the thread identifier of the transmitter, the node identifier of the receiver, the thread identifier of the receiver into a first message header according to a predetermined structure, and to transmit the first message header and the first message content to the WEB proxy module 20. The WEB proxy module 20 is configured to receive the first message header and the first message content from the communication module 10, to read the thread identifier of the transmitter from the first message header, to establish a corresponding sub-thread according to the thread identifier of the transmitter, to transmit the first message header and the first message content to the predetermined sub-thread of the receiver according to the node identifier of the receiver through the established sub-thread, wherein the predetermined sub-thread of the receiver is corresponding to the thread identifier of the receiver.

In the above, the WEB proxy module 20 is further configured to receive from the receiver a second message, which carries a second message header and a second message content, wherein the second message header carries a identifier of the transmitter, the thread identifier of the transmitter, the receiver identifier, a thread identifier of the receiver, and the second message event number, wherein the second message header has the structure same as that of the first message header, and forwards the second message header and the second message content to the communication module 10 according to the sub-thread corresponding to the thread identifier of the receiver. The communication module 10 is further configured to receive the second message, to parse the second message header according to the predetermined structure to obtain the node identifier of the transmitter in the second message header, to transmit the second message content to the predetermined sub-thread of the transmitter according to the node identifier of the transmitter, wherein the transmitter predetermined sub-thread is corresponding to the thread identifier of the transmitter, and the first message event number and the second message event number are identical or different.

Preferably, on the basis of the network interconnection system between a WEB application and an external device shown in Fig.1, Fig.2 shows a block diagram of a preferred structure of the network interconnection system between a WEB application and an external device. As shown in Fig.2, the system also comprises transceiver module 30 and forwarding module 40.

The transceiver module 30 is configured to receive a message header and message content from the communication module 10, and to forward the message header and the message content to the WEB proxy module 20, wherein the communication module 10 and the transceiver module 30 perform message interaction via one of the following: a TCP link and a UDP link. The forwarding module 40 is configured to forward the message headers and the message contents to the receiver and/or the transmitter.

It is to be noted that the above mentioned communication module 10 processes the received message by Java language, and the WEB proxy module 20 processes the received message thereof by using C language. The transmitter and the receiver each comprise but are not limited to, an upper layer WEB application and a function module, for example, the transmitter can be one thread node of a certain upper layer WEB application/function module, correspondingly, the receiver can be other thread node of the layer WEB application/function module; the transmitter and receiver can be the thread nodes of different WEB application/function modules. In addition, the transmitter and the receiver performing message transmission using the network interconnection system between a WEB application and an external device according to the embodiment of the present invention are all fallen into the scope of the present invention.

By the network interconnection system between a WEB application and an external device according to an embodiment of the present invention, the integration of the devices based on WEB application can achieve reduced the difficulty in WEB development and improved the performance and stability of the WEB application, compared with prior art.

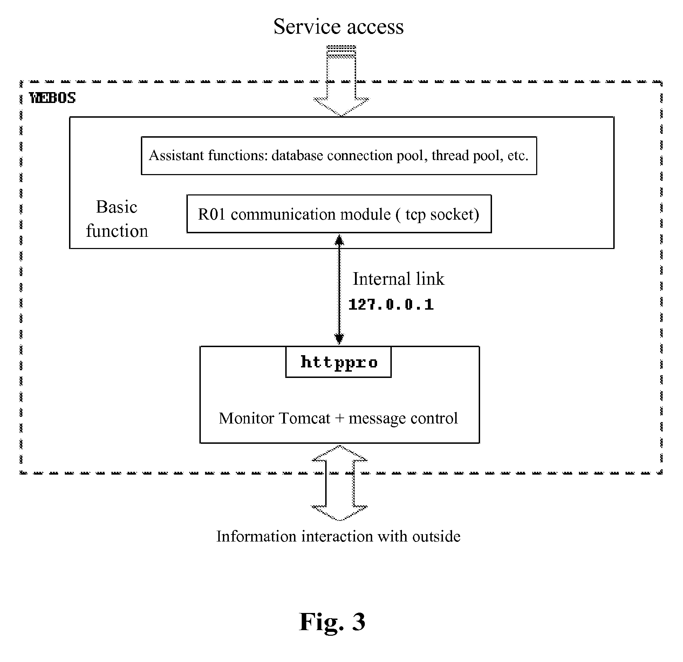

Fig.3 is a particular embodiment of the network interconnection system between a WEB application and an external device as shown in Fig.1. As shown in Fig.3, a structural block diagram of the internal structure of the WEB operating system (abbreviated as WEBOS) is shown, wherein depending on the message communication, the WEBOS can be divided into Basic Function Layer and Message Control Layer, whose functions will be described in the following.

### Basic Function Layer

The Basic Function Layer mainly comprises the R01 communication module (i.e., the communication module mentioned above) and a module providing assistant function for WEB development, for example, the modules providing assistant function can comprise: a database connection pool, a thread pool, a log, etc., wherein the functions of the individual modules providing assistant function are the same as those of prior art, thus its detail will be omitted herein. In addition, in order to facilitate WEB application to develop services on the basis of WEBOS, the Basic Function Layer employs Java to realize the process on messages, that is to say, in a particular realization process, the R01 communication module establishes an internal link with the Message Control Layer via a TCP Socket (utilizing address 127.0.0.1).

### Message Control Layer

The Message Control Layer mainly comprises a webmonitor, a httppro (i.e., the above mentioned WEB transceiver module), a webagent (i.e., the above mentioned WEB proxy module), a zxcomm (i.e., the above mentioned forwarding module), to complete the function of Tomcat monitor and message communication. In the above, the webmonitor is configured to monitor Tomcat, while the httppro, the webagent, and the zxcomm are used by WEBOS to communicate messages with outside. In particular, the httppro is used to communicate with the R01 module of the Basic Function Layer. In a particular process, the httppro, as the service end to monitoring a port, waits to establish a TCP Socket link with the R01 module; the webagent is used to forward message, to maintain link, etc.; the zxcomm is the bottom Layer common communication module, which is responsible for communicating message of outside process. It is to be noted that the functions of individual modules in the Message Control Layer are realized by using C language.

The message interaction state between the Basic Function Layer and the Message Control Layer will be described hereinafter, wherein the Basic Function Layer and the Message Control Layer realize the message interaction via the internal communication link of the R01. The steps of establishing a link between them are as follows:
Step 1, the zxcomm is started up, and an external communication link with other nodes is established;
Step 2, the httppro is started up;
Step 3, the webagent is started up, and a registration message is sent to the httppro when the webagent is initialized, noticing the httppro to bind to the designed IP address (127.0.0.1) and a port (7777) ;
Step 4, the httppro monitors the port (7777) according to the content of the registration message sent from the webagent;
Step 5, each module of WEBOS basic function layer are started up, the R01 module, as the 7777 port with which the client end connects to the local computer, establishes an internal link, wherein the message interaction between the WEBOS R01 module and the httppro is internal communication using a self-defined internal message structure, and the heartbeat detecting mechanism is employed between the WEBOS R01 module and the httppro to ensure that the link can be recovered in time in case that the opposite end is abnormal or the system is restarted, thus it is guaranteed that the subsequent message process will not be affected.

One R01 module is realized by using Java language in the WEBOS system. The R01 module provides a message receiving and transmitting interface for the upper layer application, at the same time, one webagent module is developed by C language on the basis of the supporting module of the bottom layer, i.e., WEB proxy module, used to solve the message communication and performance problem between the WEBOS and other nodes. TCP Socket communication is employed between the R01 and the webagent, and an internal link (address: 127.0.0.1) between them is established through the httppro module, thus the message communication requirement of the upper layer WEB application and the communication mechanism supported by the bottom layer are integrated to enable the WEB application of the WEBOS to perform network interconnection through bottom layer common supporting module, like other intelligent network devices, at the same time, the device integration is realized.

In addition, the WEBOS system also provides the monitor function for service run environment, namely, the monitoring on the Tomcat (webmonitor module) is realized. The webmonitor sends the request of visiting a particular webpage to the Tomcat server periodically according to the configuration message, monitors whether the run environment of the WEB is normal wherein it restarts WEB service once detecting that the run environment is abnormal, so as to ensure that the run environment of WEB can restore to normal in time, thus enhance the stability of the WEB service.

It can be seen from above description that the WEBOS according to the present invention can not only perform the network interconnection with the main/peripheral devices of an intelligent network allowing a plurality of application devices to be integrated, but also provide monitor functions for service run environment.

### System Embodiment 2

According to an embodiment of the present invention, a network interconnection system between a WEB application and an external network device is provided, which has the same structure as that of the network interconnection system between a WEB application and an external network device as shown in Fig. 1.

The network interconnection system between a WEB application and an external device according to an embodiment of the present invention comprises: a WEB proxy module configured to receive from a receiver a message which carries a message header and message content, wherein the message header carries a node identifier of the transmitter, a thread identifier of the transmitter, a node identifier of the receiver, a thread identifier of the receiver, and a message event number, and to transmit the message header and the message content according to the sub-thread corresponding to the thread identifier of the receiver; and a communication module configured to receive the message, to parse the message header to obtain the node identifier of the transmitter in the message header, to transmit the message content to the predetermined sub-thread of the transmitter according to the node identifier of the transmitter, wherein the transmitter predetermined sub-thread is corresponding to the thread identifier of the transmitter.

### Method Embodiment

According to an embodiment of the present invention, a network interconnection method between a WEB application and an external device, which can be realized by employing the network interconnection system between a WEB application and an external device mentioned above.

It is to be noted that, for the purpose of description, the technical solution of the method embodiment is presented in the form of steps hereinafter, and these steps can be executed in a computer system such as a set of computer executable instruction. Although related drawings show these steps in a certain logic order, which, in some circumstance, can be performed in an order other than that shown or described herein.

In the case of having no contradiction, the embodiments and the features of the embodiments of the present invention can be combined with each other.

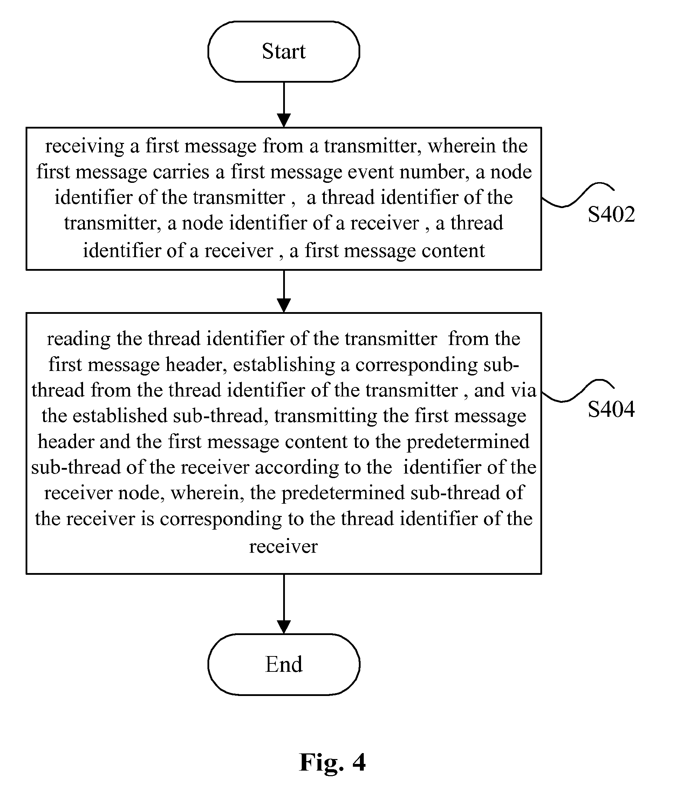

Fig.4 shows a flow chart of the network interconnection method between a WEB application and an external device according to an embodiment of the present invention. As shown in Fig.4, the method comprises the following steps (step S402 - step S404):
step S402, the network interconnection system between a WEB application and an external device receives a first message from the transmitter, wherein the first message carries a first message event number, a node identifier of the transmitter, a thread identifier of the transmitter, a node identifier of the receiver, a thread identifier of the receiver, and a first message content, the node identifier of the transmitter/receiver can comprise one of the following: module number, and office number, and the thread identifier can comprise a thread number;
step S404, the network interconnection system between a WEB application and an external device reads the thread identifier of the transmitter from the first message header, establishes a corresponding sub-thread according to the thread identifier of the transmitter, transmits the first message header and the first message content to the predetermined sub-thread of the receiver via the established sub-thread according to the node identifier of the receiver, wherein the predetermined sub-thread of the receiver is corresponding to the thread identifier of the receiver.

In a particular process, after the receiver receiving the first message sent from the transmitter, if the receiver needs to send a message to the transmitter, a second message can transmitted to the transmitter via the network interconnection system between a WEB application and an external device, the network interconnection system between a WEB application and an external device receives the second message from the receiver, the second message carries a second message header and second message content, wherein the second message header carries a identifier of the transmitter, a thread identifier of the transmitter, a receiver identifier, a thread identifier of the receiver, and a second message event number; the second message header is parsed to obtain the node identifier of the transmitter in the second message header, the second message content is transmitted to the predetermined sub-thread of the transmitter according to the node identifier of the transmitter, wherein the predetermined sub-thread of the transmitter is corresponding to the thread identifier of the transmitter, wherein the first message event number and the second message event number are identical or different.

With the technical solution according to an embodiment of the present invention, the performance and stability of the WEB application can be improved through using the WEB application system to transmit messages.

In a particular process, when the service of WEBOS transmits and receives messages through the WEBOS communication module, the respective thread numbers (pnos) are required to register to the WEBOS R01 module and the webagent module, so that the webagent and the R01 modules transmit the messages for responding to or receiving other thread to the target thread according to the pno information. The processes for the WEBOS system receiving and transmitting message are described respectively herein, wherein it is defaulted that the system has been started up, and the service has been assigned with pno.

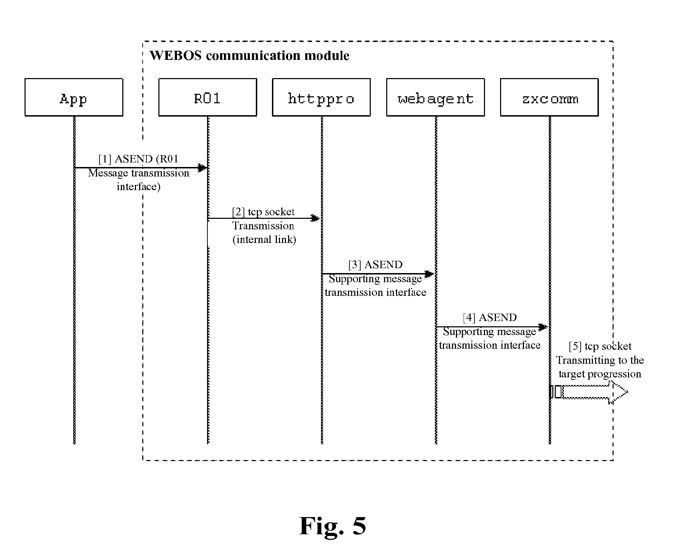

Fig.5 is a flow chart of a message transmission method of the WEBOS system according to an embodiment of the present invention. The message transmission process of the WEBOS system will be detailed in connection with Fig.5.
[1], the service schedules the message transmission interface ASEND method provided by the R01 module in the WEBOS to transmit messages, wherein the interface parameters comprise a message event number, a message body, the length of the message body, a PID of the transmitter, a PID of the receiver, wherein the PID can uniquely identify a certain thread of one node, and can comprise one of the following: a module number, a office number, a thread number, etc., wherein, the module number and the office number uniquely identify one communication node, the thread number uniquely identifies a certain thread of that node, the WEBOS communication module determines the address of the receiver and the transmitter according to the PID.
[2], the WEBOS R01 module receives a message transmission request (corresponding to the above mentioned step S402), encapsulates a message event number, the length of the message body, a transmitter PID and a receiver PID and etc. (i.e., above mentioned first message) into the message header structure as internally agreement, which is packaged with the message body into byte stream, and the byte stream is transmitted to the httppro via the established internal TCP link.
[3], after the httppro receives the above mentioned message, it is determined which module registers the link service according to the link which receives the message, herein it is webagent module to register the link service, and the message is transmitted to the webagent module via the communication interface ASEND supported by the bottom layer.
[4], the webagent receives the message from the httppro, and determines whether the message is a link detection message or a pno registration message, wherein if it is link detection message, a direct response is made, and if it is a pno registration message, a sub-thread is started up to receive the incoming message sent to the pno, so as to forward it, otherwise, the message is transmitted to the bottom layer communication module zxcomm via the communication interface ASEND supported by the bottom layer.
[5], the zxcomm module receives the message sent from the webagent, and the message is transmitted to the receiver according to the target PID information (corresponding to the above mentioned step S404).

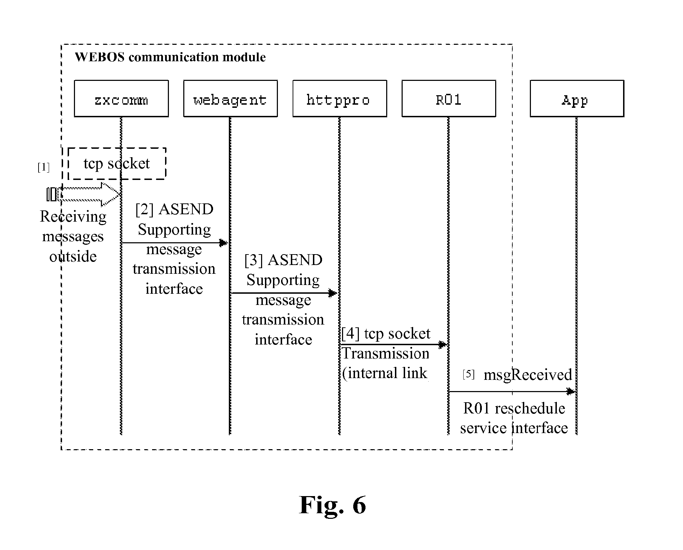

Fig.6 is a flow chart of the message transmission method of the WEBOS system according to the embodiment of the present invention. The message receiving process of the WEBOS system will be detailed in connection with Fig.6.
[1], the zxcomm module receives the message that is sent from other thread to the present node thread (i.e., above mentioned second message), the message is transmitted to a target thread according to the target PID, and the zxcomm of the WEBOS system transmits the message to the sub-thread corresponding to the webagent, wherein the transmitter can be the present node thread which receives the message directly via the interface supporting bottom layer communication without via a TCP link, or other node thread which receives a message via a TCP link.
[2], the sub-thread of the webagent receives the message sent from the zxcomm, and packages the link information registered by itself and the message body, the message is transmitted to the httppro via the communication interface ASEND supported by the bottom layer.
[3], after receiving the message, the httppro parses the message to obtain the link information, and the remaining message body is transmitted to the client end via the link, and in the WEBOS system, the message received by httppro from webagent is transmitted only to one link, i.e., the internal link between httppro and R01 modules.
[4], WEBOS R01 module, after receiving a message from the TCP link, parses the message header, determines whether it is a link detection message, wherein if yes, the counter for link detection is reset to zero and no other process is performed, otherwise, the corresponding application example is found according to receiving end pno in the message header (the pno has been registered in the WEBOS, otherwise the message is discarded), the messageReceived interface of the application example is re-scheduled, and the message event number, the message body, and the PID of the transmitter are passed to the application via parameters. Because the WEBOS R01 module is implemented by using Java language, direct re-scheduling of service interface is enough herein, which is not in the way of message transmission.
[5], the service implemented on WEBOS, if intending to receive incoming message, must realize messageReceived interface, so as to accept the interface re-scheduling of WEBOS, therefore the incoming message is received and the certain service is processed.
   In the present invention, by combining a Java program and a C program, the message communication requirement of an upper layer WEB application and the communication mechanism supported by bottom layer are integrated, thus network interconnection and integration of a WEB application and other devices are realized, at the same time, the difficulty in WEB development is reduced and the performance and stability of WEB application are improved.
   As described above, by the interconnection method and/or system between a WEB application and an external device according to the present invention, the integration of devices based on WEB application can achieve reduced difficulty in WEB development and improved the performance and stability of WEB application, compared with prior art.
   Above description is used for illustrating the preferred embodiments not limiting the present invention. Various alterations and changes to the present invention are apparent to those skilled in the art. The scope defined in claims shall cover any modification, equivalent substitution and improvement in the spirit and principle of the present invention.

## Claims

1. A network interconnection system between a WEB application and an external device, **characterized by** comprising:
a communication module, configured to receive a first message from a transmitter, wherein the first message carries a first message event number, a node identifier of the transmitter, a thread identifier of the transmitter, a node identifier of a receiver, a thread identifier of the receiver, and a first message content, and to encapsulate the first message event number, the node identifier of the transmitter, the thread identifier of the transmitter, the node identifier of the receiver, the thread identifier of the receiver into a first message header according to a predetermined structure, and to transmit the first message header and the first message content; and
a WEB proxy module, configured to receive the first message header and the first message content from the communication module, to read the thread identifier of the transmitter from the first message header, to establish a corresponding sub-thread according to the thread identifier of the transmitter, to transmit the first message header and the first message content to the predetermined sub-thread of the receiver according to the node identifier of the receiver through the established sub-thread, wherein, the predetermined sub-thread of the receiver is corresponding to the thread identifier of the receiver.

2. The system according to claim 1, **characterized in that**,
the WEB proxy module is further configured to receive from the receiver a second message, which carries a second message header and a second message content, wherein the second message header carries a identifier of the transmitter, the thread identifier of the transmitter, the receiver identifier, a thread identifier of the receiver, and the second message event number, wherein the second message header has the structure same as that of the first message header, and forwards the second message header and the second message content to the communication module according to the sub-thread corresponding to the thread identifier of the receiver; and
the communication module is further configured to receive the second message, to parse the second message header according to the predetermined structure to obtain the node identifier of the transmitter in the second message header, to transmit the second message content to the predetermined sub-thread of the transmitter according to the node identifier of the transmitter, wherein, the transmitter predetermined sub-thread is corresponding to the thread identifier of the transmitter.

3. The system according to Claim 1, **characterized by** further comprising:
a transceiver module, configured to receive a message header and message content from the communication module, and to forward the message header and the message content to the WEB proxy module, wherein the communication module and the transceiver module perform message interaction via a TCP link or a UDP link.

4. The system according to claim 1, **characterized by** further comprising:
a forwarding module, configured to forward the message headers and the message contents to the receiver and/or the transmitter.

5. The system according to any one of claims 1-4, **characterized in that** the node identifier of the transmitter/receiver comprises: module number and office number.

6. The system according to any one of claims 1-4, **characterized in that** the communication module performs process on the received message thereof by using Java language.

7. The system according to any one of claims 1-4, **characterized in that** the WEB proxy module performs process on the received message thereof by using C language.

8. The system according to any one of claims 1-4, **characterized in that** the transmitter and the receiver each comprise one of the following: an upper layer WEB application and a function module.

9. The system according to any one of claims 1-4, **characterized in that** the first message event number and the second message event number are identical or different.

10. A network interconnection system between a WEB application and an external device, **characterized by** comprising:
a WEB proxy module, configured to receive from a receiver a message which carries a message header and message content,, wherein the message header carries a node identifier of a transmitter, a thread identifier of the transmitter, a node identifier of the receiver, a thread identifier of the receiver, a message event number, and to transmit the message header and the message content according to the sub-thread corresponding to the thread identifier of the receiver; and
a communication module, configured to receive the message, to parse the message header to obtain the node identifier of the transmitter in the message header, to transmit the message content to the predetermined sub-thread of the transmitter according to the node identifier of the transmitter, wherein the transmitter predetermined sub-thread is corresponding to the thread identifier of the transmitter.

11. A network interconnection method between a WEB application and an external device, **characterized by** comprising:
receiving a first message from a transmitter, wherein the first message carries a first message event number, a node identifier of the transmitter, a thread identifier of the transmitter, a node identifier of a receiver, a thread identifier of the receiver, and a first message content;
reading the thread identifier of the transmitter from the first message header, establishing a corresponding sub-thread according to the thread identifier of the transmitter, transmitting the first message header and the first message content to the predetermined sub-thread of the receiver via the established sub-thread according to the node identifier of the receiver, wherein the predetermined sub-thread of the receiver is corresponding to the thread identifier of the transmitter.

12. The method according to claim 11, **characterized by** further comprising:
receiving from the receiver the second message which carries a second message header and a second message content, wherein the second message header carries a identifier of the transmitter, the thread identifier of the transmitter, a identifier of the receiver, the thread identifier of the receiver, and a second message event number;
parsing the second message header to obtain the node identifier of the transmitter in the second message header, and transmitting the second message content to the predetermined sub-thread of the transmitter according to the node identifier of the transmitter, wherein the predetermined sub-thread of the transmitter is corresponding to the thread identifier of the transmitter.

13. The method according to claim 11 or 12, **characterized in that** the first message event number and the second message event number are identical or different.

14. The method according to claim 11 or 12, **characterized in that** the node identifier of the transmitter/receiver comprises: module number, and office number.
